# EUROPÄISCHE PATENTANMELDUNG

(11) **EP 3 567 280 A1**
(43) Veröffentlichungstag der Anmeldung: **13.11.2019**
(21) Anmeldenummer: 19173370.8
(22) Anmeldetag: 08.05.2019
(51) Int. Cl.: F16H 25/12, F16H 25/22, B25J 9/10, F16H 25/20

(54) **HUB-DREH-MODUL**

(30) Priorität: 08.05.2018 DE 102018111035
(71) Anmelder: Hiwin GmbH, 77654 Offenburg (DE)
(72) Erfinder: Mäurer, Werner, 77654 Offenburg (DE)
(74) Vertreter: Geitz Truckenmüller Lucht Christ

(57) **Zusammenfassung**

Es wird ein Hub-Dreh-Modul vorgeschlagen mit einer Spindel (2, 32, 42), welche an der Außenseite eine Linksgewindenut (5, 35) und eine Rechtsgewindenut (6, 36) aufweist, mit einer ersten Mutter (3, 33, 43), mit einer ersten Gewindenut (19) an der Innenseite der ersten Mutter (3, 33, 43), welche zusammen mit der Linksgewindenut (5, 35) der Spindel (2, 32, 42) einen ersten Spiralkanal bildet, wobei der erste Spiralkanal Teil einer geschlossenen ersten Kugel-Umlaufbahn ist, welche der ersten Mutter (3, 33, 43) zugeordnet ist, mit einer zweiten Mutter (4, 34, 44), mit einer zweiten Gewindenut (20) an der Innenseite der zweiten Mutter (4, 34, 44), welche zusammen mit der Rechtsgewindenut (6, 36) der Spindel (2, 32, 42) einen zweiten Spiralkanal bildet, wobei der zweite Spiralkanal Teil einer geschlossenen zweiten Kugel-Umlaufbahn ist, welche der zweiten Mutter (4, 34, 44) zugeordnet ist, mit einem ersten Motor (13,45), welcher die erste Mutter (33) zur Rotation antreibt, mit einem zweiten Motor (14, 46), welcher die zweite Mutter (14, 34) zur Rotation antreibt.

## Beschreibung

Die Erfindung geht aus von einem Hub-Dreh-Modul.

Hub-Dreh-Module werden auch als Hubdreheinheiten oder Drehhubeinheiten bezeichnet. Bekannte Hub-Dreh-Module stellen eine Kombination aus einem Kugelgewindetrieb und einer Drehmomentwellenführung dar. Hierzu weisen bekannte Hub-Drehmodule eine Spindel auf, die mit einer Gewindenut und mit einer Längsnut ausgestattet ist. Ferner weisen bekannte Hub-Dreh-Module eine Rotations-Kugelgewindemutter, welche der Gewindenut der Spindel zugeordnet ist, und eine Rotations- bzw. Flansch-Drehmomentkugelbuchse, welche der Längsnut der Spindel zugeordnet ist, auf. Die Rotations-Kugelgewindemutter und die Drehmomentkugelbuchse sind jeweils mit einem Antrieb ausgestattet. Je nach Drehrichtung und Drehgeschwindigkeit der beiden Antriebe wird die Spindel zu einer Rotationsbewegung, zu einer Translationsbewegung oder zu einer Kombination aus Rotation und Translation angetrieben. Typische Anwendungsbereiche sind Roboter, Werkzeugmaschinen und Montagemaschinen.

Die mit einer Gewindenut ausgestattete Spindel und die zugeordnete Kugelgewindemutter entsprechen dabei den typischen Komponenten eines Kugelgewindetriebs, welcher unter anderem dazu dient, eine Rotationsbewegung in eine lineare Bewegung umzuwandeln. Die Spindel ist mit einer an der Außenseite umlaufenden Gewindenut ausgestattet. Die Kugelgewindemutter weist ein korrespondierendes Gewinde auf und befindet sich in Gewindeeingriff mit der Spindel. Ist die Kugelgewindemutter verschiebbar und drehfest angeordnet, führt eine Rotation der Spindel zu einer linearen Bewegung der Kugelgewindemutter. Alternativ dazu führt eine Rotation der nicht verschiebbar angeordneten Kugelgewindemutter zu einer linearen Bewegung der in Drehrichtung blockierten Spindel. Bei konventionellen Schraubgewindetrieben gleiten die das Gewinde der Spindel und das Gewinde der Mutter bildenden Flächen aufeinander. Kugelgewindetriebe unterscheiden sich von konventionellen Schraubgewindetrieben dadurch, dass die Gewindenut der Spindel und eine korrespondiere Gewindenut an der Innenseite der Kugelgewindemutter gemeinsam einen Spiralkanal bilden, der Teil einer geschlossenen Rollkörper-Umlaufbahn ist. In dieser sind Kugeln beweglich aufgenommen. Werden Kugelgewindemutter und Spindel relativ zueinander bewegt, rollen die Kugeln in dem Spiralkanal. Durch die Kugeln werden die Reibung und der Verschleiß reduziert und die Positionsgenauigkeit erhöht. Neben dem Spiralkanal umfasst die Rollkörper-Umlaufbahn eine Kugelrückführung. Hierbei kann es sich um eine Einzelumlenkung oder eine Gesamtumlenkung handeln.

Zusätzlich zu einem oben beschriebenen Kugelgewindetrieb ist die Spindel eines Hub-Dreh-Moduls neben der Gewindenut mit einer in axialer Richtung verlaufenden Längsnut an ihrer Außenseite ausgestattet. Der Längsnut ist eine Drehmomentkugelbuchse zugeordnet, welche an ihrer der Spindel zugewandten Innenseite eine in axialer Richtung verlaufende Nut aufweist. Die Längsnut der Spindel bildet zusammen mit der Nut an der Innenseite der Drehmomentkugelbuchse einen Längskanal, der Teil einer geschlossenen Kugel-Umlaufbahn ist. Diese umfasst neben dem Längskanal eine Kugelrückführung. Dabei ist die Kugel-Umlaufbahn der Drehmomentkugelbuchse von der Kugelumlaufbahn der Rollkörper-Umlaufbahn der Kugelgewindemutter getrennt.

Die Drehmomentkugelbuchse bildet zusammen mit der Spindel mit Längsnut eine verdrehgesicherte Rundführung. Mit ihr können Linearbewegungen erzeugt und Drehmomente übertragen oder abgestützt werden.

Mit Hilfe der Kombination aus Spindel, Kugelgewindemutter und Drehmomentkugelbuchse sowie zwei Antrieben für die Kugelgewindemutter und die Drehmomentkugelbuchse kann die Spindel zur Rotation, Translation oder einer Kombination aus Translation und Rotation angetrieben werden.

Als nachteilig erweist sich bei bekannten Hub-Dreh-Modulen, dass bei der Translationsbewegung nur entweder die Drehmomentkugelbuchse oder die Kugelgewindemutter angetrieben wird und nicht beide angetrieben sind. Die auf die Spindel dabei übertragene Kraft ist daher reduziert, da nur das Drehmoment einer der beiden Antriebe zum Einsatz kommt. Insbesondere wenn die Translationsbewegung eine Hubbewegung ist, sorgt dies für eine erhebliche Beschränkung. Darüber hinaus ist die Herstellung des Hub-Dreh-Moduls erschwert, da die Spindel sowohl mit einer Gewindenut als auch mit einer Längsnut ausgestattet werden muss, was in separaten Arbeitsschritten erfolgt. Ferner sind zwei unterschiedliche Muttern, nämliche eine Rotations-Kugelgewindetriebmutter und ein Drehmomentkugelbuchse notwendig.

Der Erfindung liegt die Aufgabe zugrunde, ein Hub-Dreh-Modul mit Kugelgewindetrieb zur Verfügung zu stellen, bei dem zur Erzeugung einer Translationsbewegung beide Antriebe zum Einsatz kommen, so dass beide Drehmomente gemeinsam eine Antriebskraft erzeugen, und bei dem die Spindel in einem Arbeitsschritt hergestellt werden kann.

Diese Aufgabe wird durch ein Hub-Dreh-Modul mit den Merkmalen des Anspruchs 1 gelöst. Das Hub-Dreh-Modul zeichnet sich dadurch aus, dass die Spindel mit einem Rechts-Links-Gewinde und mit zwei Kugelgewindemuttern ausgestattet ist. Anstelle einer Gewindenut und einer Längsnut sind zwei gegenläufige Gewindenuten an der Spindel vorgesehen. Darüber hinaus ist anstelle einer Kombination aus Kugelgewindemutter und Drehmomentkugelbuchse eine Kombination aus zwei Kugelgewindemuttern vorgesehen. Im folgenden werden die beiden Kugelgewindemuttern als erste Mutter und zweite Mutter bezeichnet.

Die Linksgewindenut und die Rechtsgewindenut weisen einen Überlappungsbereich auf. In dem Überlappungsbereich überlappen die Linksgewindenut und die Rechtsgewindenut. Die Linksgewindenut und die Rechtsgewindenut weisen den Verlauf von mindestens zwei gegenläufigen Helices auf, die sich mit konstanter Steigung an der Außenseite um die Spindel herum winden. Der Bereich der Überlappung erstreckt sich in axialer Richtung der Spindel. In dem Überlappungsbereich kreuzen sich die Linksgewindenut und die Rechtsgewindenut der Spindel. Dabei bleibt die der Linksgewindenut zugeordnete erste Mutter über die in der Linksgewindenut abrollenden Kugeln stets in Eingriff mit der Linksgewindenut. Da die in der ersten Mutter verlaufende erste Gewindenut zusammen mit der Linksgewindenut einen ersten Spiralkanal bildet, welcher Teil einer geschlossenen ersten Kugel-Umlaufbahn ist, können die ersten Kugeln den ersten Spiralkanal nicht verlassen. Entsprechendes gilt für die zweite Mutter. Diese bleibt aus den entsprechenden Gründen stets in Eingriff mit der Rechtsgewindenut. Die Spindel kann sich daher relativ zu der ersten Mutter und der zweiten Mutter entlang des Abschnitts bewegen, in welchem die Linksgewindenut und die Rechtsgewindenut überlappen.

Die Ganghöhe der Linksgewindenut ist diejenige Strecke, um die sich die Spindel oder die mit der Linksgewindenut in Eingriff stehende erste Mutter bei einer vollen Umdrehung in axialer Richtung bewegen. Dies entspricht dem Abstand benachbarter Windungen derselben Linksgewindenut in axialer Richtung. Die Ganghöhe der Rechtsgewindenut ist diejenige Strecke, um die sich die Spindel oder die mit der Rechtsgewindenut in Eingriff stehende zweite Mutter bei einer vollen Umdrehung in axialer Richtung bewegen. Dies entspricht dem Abstand benachbarter Windungen derselben Rechtsgewindenut in axialer Richtung. Die Ganghöhe der Linksgewindenut und die Ganghöhe der Rechtsgewindenut können gleich oder verschieden sein. Die Ganghöhe bestimmt die Steigung und den Steigungswinkel der Gewindenut.

In dem Überlappungsbereich kreuzen sich die Linksgewindenut und die Rechtsgewindenut. Überlappen die Linksgewindenut und die Rechtsgewindenut über mehrere Ganghöhen, liegen mehrere Kreuzungen vor. Haben Linksgewindenut und Rechtsgewindenut die gleiche Steigung, so weisen Linksgewindenut und Rechtsgewindenut pro Ganghöhe zwei Kreuzungen auf.

Damit die Kugeln an den Kreuzungen nicht verhaken, können die sich an den Kreuzungen von Linksgewindenut und Rechtsgewindenut bildenden Kanten abgerundet sein.

Von der Ganghöhe der Linksgewindenut, der Ganghöhe der Rechtsgewindenut, der Breite der Linksgewindenut, der Breite der Rechtsgewindenut und dem Durchmesser der Spindel hängt ab, über welche Distanz in Umfangsrichtung der Spindel sich eine Kreuzung zwischen der Linksgewindenut und der Rechtsgewindenut erstreckt. Im Bereich der Kreuzung sind die ersten Kugeln durch die erste Gewindenut der ersten Mutter derart geführt, dass sie nicht aus der Linksgewindenut der Spindel ausbrechen und in die Rechtsgewindenut wechseln können. Entsprechendes gilt für die zweiten Kugeln, welche in der zweiten Gewindenut der zweiten Mutter geführt sind und im Bereich der Kreuzung nicht aus der Rechtsgewindenut der Spindel ausbrechen und in die Linksgewindenut wechseln können.

Von Vorteil ist, wenn der erste Spiralkanal, den die erste Mutter zusammen mit der Spindel bildet, länger ist als die Distanz, über welche sich eine Kreuzung zwischen Linksgewindenut und Rechtsgewindenut in Umfangsrichtung der Spindel erstreckt. Ist diese Voraussetzung erfüllt und ist der erste Spiralkanal mit ersten Kugeln gefüllt, so ist dafür Sorge getragen, dass sich nicht alle erste Kugeln des ersten Spiralkanals gleichzeitig in der Kreuzung befinden. Ein Teil der ersten Kugeln befindet sich außerhalb der Kreuzung und ist somit nicht nur durch die erste Gewindenut der ersten Mutter sondern auch durch die Linksgewindenut der Spindel geführt. Entsprechendes gilt für den zweiten Spiralkanal.

In dem Überlappungsbereich von Linksgewindenut und Rechtsgewindenut kann sich die Spindel sowohl relativ zu der ersten Mutter als auch relativ zu der zweiten Mutter bewegen. Sind die beiden Muttern ortsfest angeordnet, können sie sich nicht in axialer Richtung aufeinander zu oder voneinander weg bewegen. Bei der Herstellung der Spindel wird durch die axiale Länge des Überlappungsbereichs von Linksgewindenut und Rechtsgewindenut der Spindel vorgegeben, über welche Distanz in axialer Richtung sich die Spindel relativ zu den beiden Muttern bewegen kann. Soll eine Bewegung der Spindel relativ zu den beiden Muttern über die gesamte axiale Länge der Spindel möglich sein, kann sich sowohl die Linksgewindenut als auch die Rechtsgewindenut über die gesamte Spindel erstrecken. In diesem Fall überlappen Linksgewindenut und Rechtsgewindenut vollständig. Der Überlappungsbereich stimmt mit der axialen Länge der Spindel überein.

Das Hub-Dreh-Modul ist damit flexibel einsetzbar. Eine Anpassung an geänderte Anforderungen ist jederzeit möglich. So können der Spindeldurchmesser, die Steigung der Gewindenuten und die axiale Länge der Spindel in Abhängigkeit von der jeweiligen Anforderung ausgewählt werden. Die beiden Muttern werden entsprechend vorgegeben. Verschiedene Baugrößen sind ohne weiteres realisierbar.

Die ersten Kugeln der ersten Mutter und die zweiten Kugeln der zweiten Mutter werden in an sich bekannter Weise in der ihnen zugeordneten Kugel-Umlaufbahn zurückgeführt. Hierzu sind die erste Mutter und die zweite Mutter mit einer entsprechenden Kugelrückführung ausgestattet.

Jede der beiden Muttern ist mit einem Antrieb ausgestattet. Der Antrieb umfasst einen Motor. Dieser kann auch als Muttern-Antrieb bezeichnet werden.

Weisen die Linksgewindenut und die Rechtsgewindenut der Spindel die gleiche Steigung auf, so haben die Rotationsbewegungen der beiden Muttern folgenden Effekt auf die Spindel:
- Werden die erste Mutter und die zweite Mutter in entgegen gesetzte Drehrichtungen mit der gleichen Geschwindigkeit gedreht, so führt dies zu einer Translationsbewegung der Spindel, ohne dass die Spindel dabei rotiert.
- Werden die erste Mutter und die zweite Mutter in die gleiche Richtung mit der gleichen Geschwindigkeit gedreht, so führt dies zu einer Rotation der Spindel, ohne dass sich die Spindel dabei in axialer Richtung verschiebt.
- Werden die erste Mutter und die zweite Mutter in entgegen gesetzte Drehrichtungen mit unterschiedlichen Geschwindigkeiten gedreht, so führt dies zu einer überlagerten Rotations- und Translationsbewegung der Spindel.

Eine Translationsbewegung, eine Rotationsbewegung und eine überlagerte Translations- und Rotationsbewegung der Spindel kann auch erzeugt werden, wenn die Linksgewindenut und die Rechtsgewindenut eine unterschiedliche Steigung aufweisen. Dieser Unterschied kann mittels der Geschwindigkeiten, mit denen die beiden Motoren die Muttern bewegen, kompensiert werden. Dies erfolgt mittels einer Steuerung der Motoren.

Damit werden für alle Bewegungsarten der Spindel, insbesondere auch für eine Translationsbewegung, beide Muttern mittels des ihnen jeweils zugeordneten Motors angetrieben. Damit kann auch für die Translation der Spindel das Drehmoment beider Antriebe genutzt werden. Bei einer Hubbewegung stehen damit beide Drehmomente kumulativ zur Verfügung. Auf eine zusätzliche Führung der Spindel kann verzichtet werden, da sich die beiden Muttern bei axial wirkenden Kräften über die Kugeln an der Gewindenut der Spindel abstützen.

Für die Vorschubbewegung steht eine höhere Tragzahl zur Verfügung, weil beide Muttern Axialkräfte aufnehmen können. Dies stellt einen erheblichen Vorteil gegenüber bekannten Hub-Dreh-Modulen mit einer Spindel mit Längsnut und einer Drehmomentkugelbuchse dar, da die Längsnuten keine Kräfte in axialer Richtung aufnehmen können.

Das Hub-Dreh-Modul zeichnet sich aus durch ein geringes Spiel der Kugelgewindemuttern, eine hohe Leistung, große Kräfte und große Geschwindigkeiten.

Darüber hinaus wird bei der Herstellung die Spindel mit zwei Gewindenuten ausgestattet. Eine Längsnut entfällt. Beide Gewindenuten können in einem Arbeitsschritt erzeugt werden. Die beiden Kugelgewindemuttern können hinsichtlich ihres grundsätzlichen Aufbaus und hinsichtlich ihrer äußeren Form identisch sein. Dadurch ist die Herstellung des Hub-Dreh-Moduls vereinfacht.

Nach einer vorteilhaften Ausgestaltung der Erfindung sind die beiden Kugelgewindemuttern mit einer Vorspannung an der Spindel angeordnet. Dadurch sind sie spielfrei. Die Translationsbewegung und die Rotationsbewegung können daher mit hoher Präzision ausgeführt werden.

Nach einer weiteren vorteilhaften Ausgestaltung der Erfindung umfasst der sich in axialer Richtung der Spindel erstreckende Bereich der Überlappung mindestens eine Ganghöhe der Linksgewindenut und/ oder mindestens eine Ganghöhe der Rechtsgewindenut.

Nach einer weiteren vorteilhaften Ausgestaltung der Erfindung umfasst der sich in axialer Richtung der Spindel erstreckende Bereich der Überlappung ein Vielfaches der Ganghöhe der Linksgewindenut und/ oder ein Vielfaches der Ganghöhe der Rechtsgewindenut.

Nach einer weiteren vorteilhaften Ausgestaltung der Erfindung umfasst der Überlappungsbereich die gesamte Länge der Linksgewindenut und/ oder der Rechtsgewindenut. Mit Länge ist hierbei die Ausdehnung der Linksgewindenut oder der Rechtsgewindenut in axialer Richtung der Spindel gemeint. Dabei können Linksgewindenut und Rechtsgewindenut in axialer Richtung der Spindel die gleiche Ausdehnung oder eine unterschiedliche Ausdehnung aufweisen.

Nach einer weiteren vorteilhaften Ausgestaltung der Erfindung stimmt die Steigung der Linksgewindenut mit der Steigung der Rechtsgewindenut überein. Dies bedeutet, dass die Ganghöhe der Linksgewindenut mit der Ganghöhe der Rechtsgewindenut übereinstimmt. In diesem Fall bewegt sich die Spindel bei einer Umdrehung der ersten Mutter und der zweiten Mutter um 360° um die Steigungshöhe der Spindel.

Nach einer weiteren vorteilhaften Ausgestaltung der Erfindung ist die Steigung der Linksgewindenut von der Steigung der Rechtsgewindenut verschieden. Dies bedeutet, dass die Ganghöhe der Linksgewindenut von der Ganghöhe der Rechtsgewindenut verschieden ist. Die unterschiedliche Steigung der beiden Nuten ist bei der Steuerung der zugehörigen Antriebe zu berücksichtigen.

Nach einer weiteren vorteilhaften Ausgestaltung der Erfindung ist der Überlappungsbereich von Linksgewindenut und Rechtsgewindenut mindestens so lang wie die Ausdehnung der ersten Mutter und/ oder der zweiten Mutter in axialer Richtung der Spindel.

Nach einer weiteren vorteilhaften Ausgestaltung der Erfindung stimmen die erste und die zweite Mutter hinsichtlich ihrer äußeren Bauform überein. Dies vereinfacht die Herstellung des Kugelgewindetriebs und dessen Einbau in ein Gehäuse.

Nach einer weiteren vorteilhaften Ausgestaltung der Erfindung stimmt der Durchmesser der Spindel im wesentlichen mit der Ganghöhe der Linksgewindenut und/ oder der Rechtsgewindenut überein.

Nach einer weiteren vorteilhaften Ausgestaltung der Erfindung ist die Spindel mit mehreren parallel verlaufenden Linksgewindenuten ausgestattet. Ferner ist die erste Mutter mit mehreren parallel verlaufenden ersten Gewindenuten ausgestattet. Die Ganghöhe der Linksgewindenuten und der ersten Gewindenuten stimmen dabei alle überein. Die Linksgewindenuten der Spindel und die ersten Gewindenuten der ersten Mutter bilden zusammen einen mehrgängigen ersten Spiralkanal.

Nach einer weiteren vorteilhaften Ausgestaltung der Erfindung ist die Spindel mit mehreren parallel verlaufenden Rechtsgewindenuten ausgestattet. Ferner ist die zweite Mutter mit mehreren parallel verlaufenden zweiten Gewindenuten ausgestattet. Die Ganghöhe der Rechtsgewindenuten und der zweiten Gewindenuten stimmen dabei alle überein. Die Rechtsgewindenuten der Spindel und die zweiten Gewindenuten der zweiten Mutter bilden zusammen einen mehrgängigen zweiten Spiralkanal.

Nach einer weiteren vorteilhaften Ausgestaltung der Erfindung ist die Spindel als Hohlkörper ausgebildet und weist einen sich in axialer Richtung erstreckenden Hohlraum auf. Dabei kann sich der Hohlraum über die gesamte axiale Länge der Spindel erstrecken. Die Spindel kann an einer Stirnseite oder an beiden Stirnseiten Öffnungen aufweisen. In dem Hohlraum können Medienleitungen oder Versorgungsleitungen angeordnet sein. Hierzu zählen beispielsweise elektrische Leitungen, Lichtleiter oder Leitungen für Druckluft oder Flüssigkeit.

Nach einer weiteren vorteilhaften Ausgestaltung der Erfindung weisen der erste Motor und der zweite Motor eine gemeinsame Steuerung auf.

Nach einer weiteren vorteilhaften Ausgestaltung der Erfindung ist eine Basis vorgesehen, an der die beiden Muttern drehbar aber ortsfest, das heißt translationsfest und damit nicht verschiebbar aufgenommen sind. An dieser Basis sind auch der erste Muttern-Antrieb und der zweite Muttern-Antrieb angeordnet. Die Spindel ist an der Basis über die Muttern drehbar und verschiebbar aufgenommen. Die Muttern sorgen damit für eine Bewegung und eine Lagerung der Spindel. Eine zusätzliche Lagerung oder Führung der Spindel ist nicht notwendig. Der erste Motor und der zweite Motor sind mit einer gemeinsamen Steuerung ausgestattet. Die Steuerung sorgt dafür, dass die auf die erste Mutter und die auf die zweite Mutter übertragene Rotationsbewegung aufeinander abgestimmt sind. Die Basis kann dabei Teil eines Gehäuses sein.

Nach einer weiteren vorteilhaften Ausgestaltung der Erfindung weist der erste Motor einen als Innenläufer ausgebildeten ersten Rotor auf. Dieser erste Rotor ist an der Außenseite der ersten Mutter angeordnet und umgibt diese, wobei die Drehachse des ersten Rotors mit der Drehachse der ersten Mutter zusammenfällt. Entsprechend weist der zweite Motor einen als Innenläufer ausgebildeten zweiten Rotor auf, der an der Außenseite der zweiten Mutter angeordnet ist und diese umgibt. Dabei fällt die Drehachse des zweiten Rotors mit der Drehachse der zweiten Mutter zusammenfällt. Bei den beiden Motoren handelt es sich vorteilhafterweise um Torquemotoren. Derartige elektrische Direktantriebe weisen große Drehmomente bei relativ kleinen Drehzahlen auf. Durch die Verbindung von Motor und Mutter wird eine kompakte Bauweise bei gleichzeitig hoher Leistung erreicht.

Die Bewegung der Spindel kann auf ein zu bewegendes Bauteil, beispielsweise ein Werkzeug oder einen Greifer übertragen werden. Hierzu ist die Spindel vorteilhafterweise mit einem Kopplungsteil, beispielsweise mit einem Flansch, ausgestattet. Ein mögliches Anwendungsgebiet stellen Roboter dar, insbesondere Roboter mit Parallelkinematik. Das Hub-Dreh-Modul sorgt dafür, dass ein an einem Trägerelement angeordnetes Werkzeug oder ein Greifer in einer gewünschten Art und Weise bewegt wird.

Nach einer weiteren vorteilhaften Ausgestaltung der Erfindung ist ein Industrieroboter mit mindestens einem Betätigungsarm und mit einem an dem Betätigungsarm angeordneten Trägerelement, welches ein Werkzeug oder einen Greifer aufnimmt, mit einem erfindungsgemäßen Kugelgewindetrieb ausgestattet. Der Kugelgewindetrieb überträgt auf ein an dem Trägerelement angeordnetes Werkzeug oder einen an dem Trägerelement angeordneten Greifer eine Rotationsbewegung, eine Translationsbewegung oder eine Kombination aus einer Rotations- und einer Translationsbewegung. Vorteilerweise handelt es sich bei dem Industrieroboter um einen Scararoboter. Der Kugelgewindetrieb sorgt für einen Antrieb der dritten und vierten Achse.

Weitere Vorteile und vorteilhaften Ausgestaltungen der Erfindung sind der nachfolgenden Beschreibung, der Zeichnung und den Ansprüchen entnehmbar.

### Zeichnung

In der Zeichnung sind zwei Ausführungsbeispiele der Erfindung dargestellt. Es zeigen:
- Figur 1: erstes Ausführungsbeispiel eines Hub-Dreh-Moduls in perspektivischer Ansicht,
- Figur 2: Hub-Dreh-Modul gemäß Figur 1 ohne Gehäuse,
- Figur 3: Hub-Dreh-Modul gemäß Figur 1 ohne Motoren,
- Figur 4: Hub-Dreh-Modul gemäß Figur 1 ohne Motoren und Riemengetriebe
- Figur 5: Spindel, erste Mutter und zweite Mutter des Hub-Dreh-Moduls gemäß Figur 1, wobei die beiden Muttern im Längsschnitt dargestellt sind,
- Figur 6: erste Mutter des Hub-Dreh-Moduls gemäß Figur 1 im Längsschnitt,
- Figur 7: zweite Mutter des Hub-Dreh-Moduls gemäß Figur 1 im Längsschnitt,
- Figur 8: Spindel des Hub-Dreh-Moduls gemäß Figur 1 in Seitenansicht,
- Figur 9: zweites Ausführungsbeispiel eines Hub-Dreh-Moduls in Seitenansicht,
- Figur 10: drittes Ausführungsbeispiel eines Hub-Dreh-Moduls in Seitenansicht.

### Beschreibung der Ausführungsbeispiele

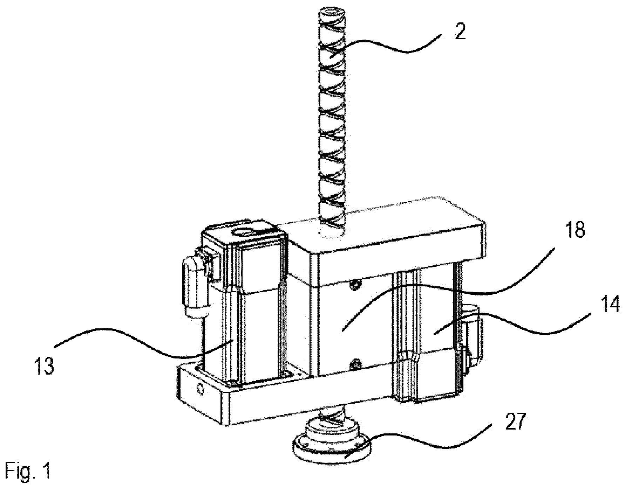

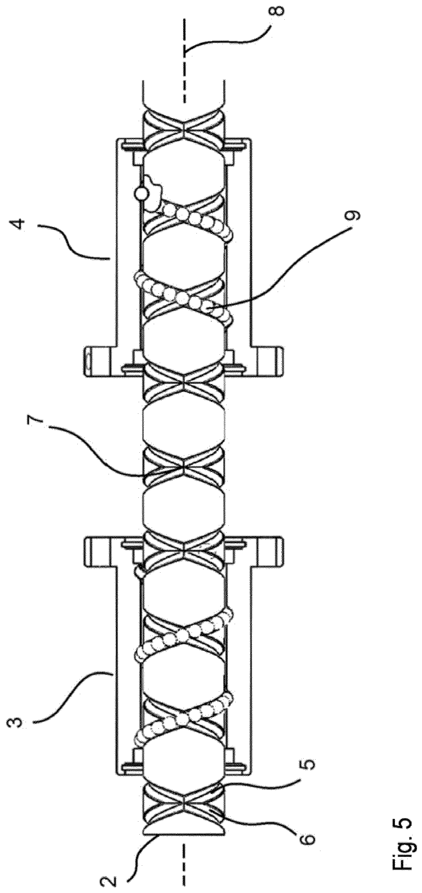

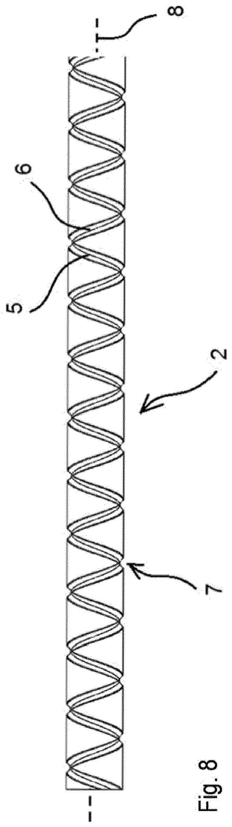

In den Figuren 1 bis 8 ist ein erstes Ausführungsbeispiel eines Hub-Dreh-Moduls 1 in einer Seitenansicht dargestellt. Das Hub-Dreh-Modul 1 weist eine Spindel 2, eine erste Mutter 3 und eine zweite Mutter 4 auf. Die Spindel 2 ist ausgestattet mit einer Linksgewindenut 5 und einer Rechtsgewindenut 6, welche sich über nahezu die gesamte axiale Länge der Spindel 2 erstrecken. Dies ist in den Figuren 5 und 8 dargestellt. Der Überlappungsbereich der beiden Gewindenuten erstreckt sich über die gesamte axiale Länge der Linksgewindenut 5 und der Rechtsgewindenut 6. Dadurch ergeben sich entlang der Spindel eine Vielzahl von Kreuzungen 7 zwischen der Linksgewindenut und der Rechtsgewindenut.

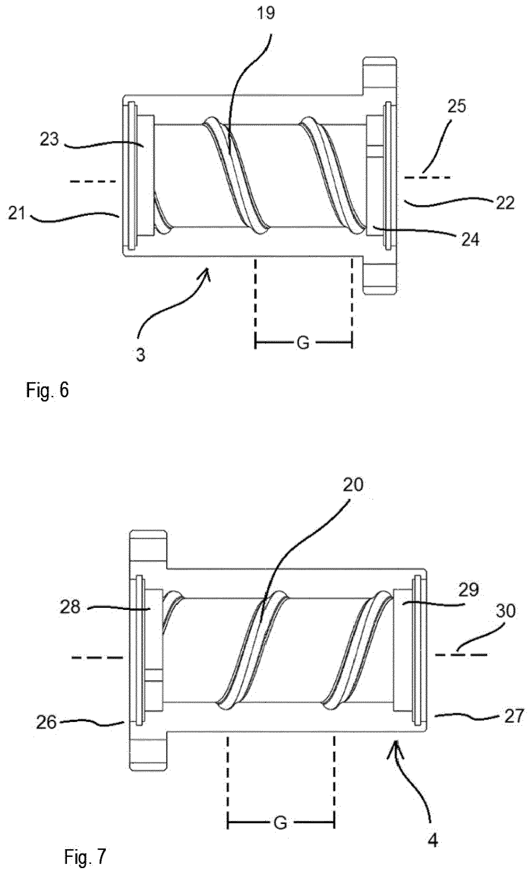

Die erste Mutter 3 und die zweite Mutter 4 weisen jeweils eine Durchgangsöffnung auf, in welcher die Spindel 2 aufgenommen ist. Dabei ist die erste Mutter 3 an ihrer Innenseite der Durchgangsöffnung mit einer zu der Linksgewindenut 5 der Spindel 2 korrespondierenden ersten Gewindenut 19 ausgestattet. Diese bildet zusammen mit der Linksgewindenut 5 einen ersten Spiralkanal. Der erste Spiralkanal ist Teil einer geschlossenen ersten Kugel-Umlaufbahn, welche der ersten Mutter 3 zugeordnet ist. In diesem Spiralkanal sind Kugeln 9 aufgenommen. Entsprechendes gilt für die zweite Mutter. Die Gewindenuten der beiden Muttern sind in den Figuren 6 und 7 dargestellt. Die Kugeln 9 sind in Figur 5 dargestellt.

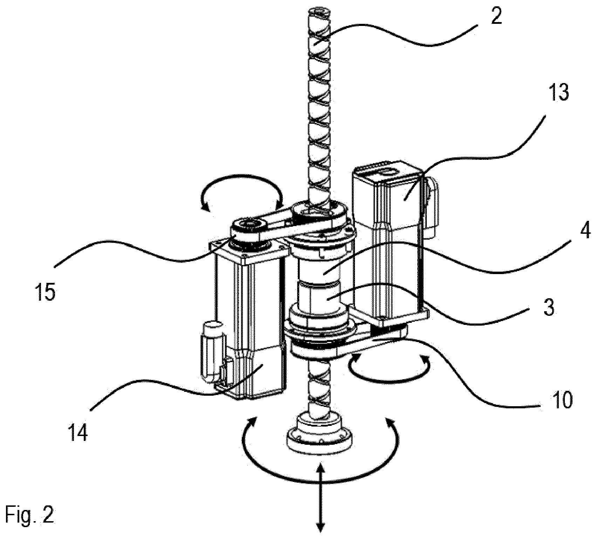

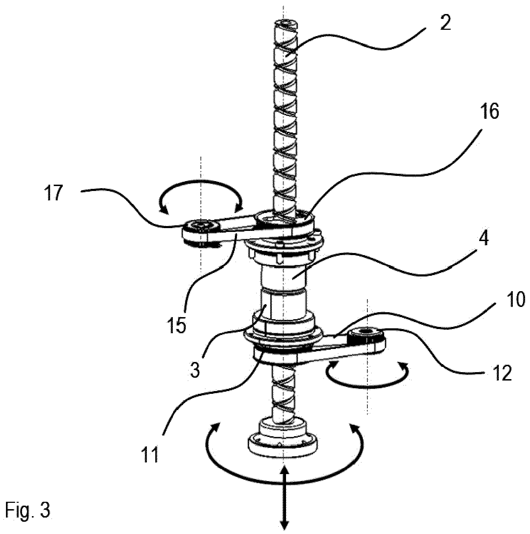

Die erste Mutter 3 ist über ein erstes Riemengetriebe mit einem ersten Riemen 10 und zwei Riemenscheiben 11, 12 mit einer Antriebswelle eines ersten Motors 13 verbunden. Der erste Motor bildet dabei einen ersten Muttern-Antrieb. Dabei ist die erste Riemenscheibe 11 drehfest an der ersten Mutter 3 angeordnet. Die zweite Riemenscheibe 12 ist drehfest an der Antriebswelle des ersten Motors 13 angeordnet. Entsprechend ist die zweite Mutter 4 über ein zweites Riemengetriebe mit einem zweiten Motor 14 verbunden. Der zweite Motor bildet dabei den zweiten Muttern-Antrieb. Das zweite Riemengetriebe umfasst einen zweiten Riemen 15, eine dritte Riemenschreibe 16 und eine vierte Riemenscheibe 17. Das erste Riemengetriebe und zweite Riemengetriebe sind in den Figuren 2 und 3 dargestellt. Der erste Motor 13 und der zweite Motor 14 sind in Figur 1 und 2 dargestellt. Figur 1 zeigt das Hub-Dreh-Modul 1 mit einem Gehäuse 18, welches die erste Mutter 3, die zweite Mutter 4, das erste Riemengetriebe und das zweite Riemengetriebe umschließt. An dem Gehäuse 18 sind darüber hinaus der erste Motor 13 und der zweite Motor 14 angeordnet.

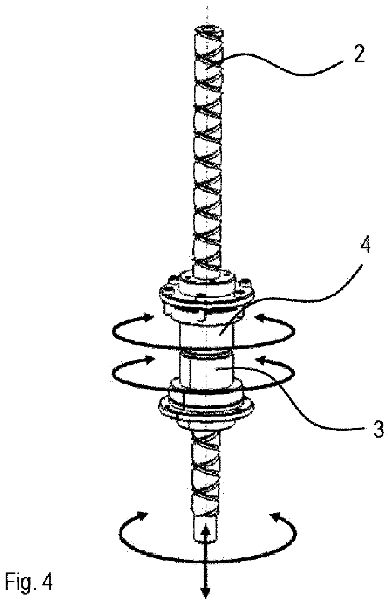

In den Figur 2 und 3 sind die Drehung der Antriebswelle des ersten Motors 13 und die Drehung der Antriebswelle des zweiten Motors 14 durch Pfeile dargestellt. Ferner ist die sich daraus ergebende Rotation und die sich daraus ergebende Translation der Spindel 2 durch Pfeile dargestellt. Die Drehachsen sind durch gestrichelte Linien angedeutet. Figur 4 zeigt das Hub-Dreh-Modul 1 ohne Riemengetriebe und ohne Motoren. In Figur 4 ist die durch die Motoren und die Riemengetriebe auf die erste und zweite Mutter übertragene Rotation durch Pfeile dargestellt.

In den Figuren 5 bis 8 sind die Spindel 2, die erste Mutter 3 und die zweite Mutter 4 im Detail dargestellt. Diese drei Komponenten bilden zusammen einen Kugelgewindetrieb. Figur 5 zeigt einen Abschnitt der Spindel 2. In diesem Abschnitt befinden sich die erste Mutter 3 und die zweite Mutter 4. Die erste Mutter 3 und die zweite Mutter 4 sind in Längsrichtung geschnitten, so dass die Kugeln 9 sichtbar sind. Diese befinden sich in dem ersten Spiralkanal, der durch die Linksgewindenut 5 der Spindel 2 und durch die erste Gewindenut 19 der ersten Mutter 3 gebildet wird. Ferner befinden sich Kugeln 9 in dem zweiten Spiralkanal, der durch die Rechtsgewindenut 6 der Spindel und durch die zweite Gewindenut 20 der zweiten Mutter 4 gebildet wird. Die erste Gewindenut 19 der ersten Mutter 3 ist in Figur 6 erkennbar. Die zweite Gewindenut 20 der zweiten Mutter 4 ist in Figur 7 erkennbar. Die erste Mutter 3 und die zweite Mutter 4 sind bis auf den Verlauf der ersten Gewindenut 19 und den Verlauf der zweiten Gewindenut 20 baugleich. Figuren 6 und 7 zeigen, dass sich die erste Gewindenut 19 der ersten Mutter 3 und die zweite Gewindenut 20 der zweiten Mutter 4 im wesentlichen über die doppelte Ganghöhe G in axialer Richtung bezogen auf die Längsachse 25 der ersten Mutter 3 erstrecken. Die Längsachse 8 der Spindel fällt mit der Längsachse 23 der ersten Mutter 3 und mit der Längsachse 26 der zweiten Mutter 4 zusammen, wenn die Muttern 3, 4 an der Spindel 2 angeordnet sind. Die erste Mutter 3 weist eine Durchgangsöffnung auf, die sich von der einen Stirnseite 21 bis zur anderen Stirnseite 22 der ersten Mutter 3 erstreckt. Die erste Mutter 3 und die zweite Mutter 4 sind mit einer in der Zeichnung nicht dargestellten Kugel-Umlenkung ausgestattet. Die Kugel-Umlenkung bildet zusammen mit dem Spiralkanal eine geschlossene Kugelumlaufbahn. Über die Kugel-Umlenkung werden die den Stirnseiten 21, 22 der Mutter 3 zugewandten Enden der ersten Gewindenut 19 miteinander verbunden. Die dem Spiralkanal der ersten Mutter zugeordneten Kugeln 9 verbleiben daher stets innerhalb der ersten Mutter 3. Entsprechendes gilt für die zweite Mutter 4 und den ihr zugeordneten Kugeln. Die zweite Mutter weist Stirnseiten 24, 25 und eine Längsachse 30 auf, die mit der Längsachse 8 der Spindel 2 und mit der Längsachse 23 der ersten Mutter 3 zusammenfällt, wenn die erste Mutter 3 und die zweite Mutter 4 an der Spindel 2 angeordnet sind.

Figur 5 zeigt, dass im wesentlichen die gesamte erste Gewindenut 19 der ersten Mutter 3 und die gesamte zweite Gewindenut 20 der zweiten Mutter mit Kugeln befüllt sind. Dadurch ist gewährleistet, dass stets eine Vielzahl von Kugeln 9 im ersten Spiralkanal und im zweiten Spiralkanal geführt ist, so dass ein Ausbrechen der Kugeln 9 an den Kreuzungen 7 von Linksgewindenut 5 und Rechtsgewindenut 6 der Spindel 2 verhindert wird. Darüber hinaus können die erste Mutter 3 und die zweite Mutter 4 entsprechend große Kräfte aufnehmen und übertragen.

Figur 8 zeigt die Spindel 2 in Alleinstellung in Seitenansicht. In dieser Darstellung ist die Spindel 2 gegenüber der Darstellung in Figur 5 um 90° um ihre Längsachse 8 gedreht, so dass sich die Kreuzungen 7 der Linksgewindenut 5 und der Rechtsgewindenut 6 am oberen und unteren Rand der Darstellung befinden.

Aus der Zeichnung ergibt sich, dass sich die Spindel 2 relativ zu den beiden Muttern 3, 4 über gesamte axiale Länge bewegen kann. Eine Begrenzung ist dabei dadurch ein in den Figuren 1, 2 und 3 dargestelltes Kopplungsteil 27 gegeben, welches radial nach außen über die Spindel 2 übersteht. Dieses Kopplungsteil 27 dient dazu, die Spindel mit einem anzutreibenden Teil zu verbinden.

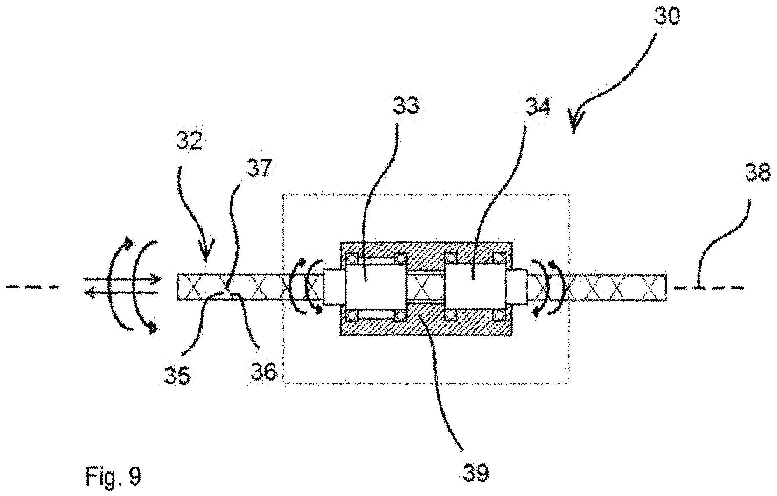

In Figur 9 ist ein zweites Ausführungsbeispiel eines Hub-Dreh-Moduls 30 mit einer Spindel 32, einer ersten Mutter 33, einer zweiten Mutter 34, einer Linksgewindenut 35, einer Rechtsgewindenut 36, mehreren Kreuzungen 37 und einer Längsachse 38 der Spindel 32 dargestellt. Die erste Mutter 33 und die zweite Mutter sind ortsfest an einer Basis 39 angeordnet. Die erste Mutter 33 ist mit einem ersten Motor und die zweite Mutter 34 mit einem zweiten Motor ausgestattet. Der erste Motor treibt die erste Mutter 33 in Uhrzeigersinn und entgegen dem Uhrzeigersinn zur Rotation an. Der zweite Motor treibt die zweite Mutter 34 zu einer Rotation in Uhrzeigersinn oder entgegen dem Uhrzeigersinn um die Spindel 32 herum an. Dies ist in Figur 9 durch gekrümmte Pfeile neben der ersten Mutter 33 und neben der zweiten Mutter 34 angedeutet. Die Spindel 32 wird durch die beiden Muttern 33, 34 bewegt. Dabei ist die Spindel 32 ausschließlich in den beiden Muttern 33, 34 gelagert. Je nachdem wie die beiden Muttern 33, 34 angetrieben werden, lassen sich folgende Bewegungen der Spindel erzeugen:
- Werden die erste Mutter 33 und die zweite Mutter 34 in entgegen gesetzte Drehrichtungen mit der gleichen Geschwindigkeit gedreht, so führt dies zu einer Translationsbewegung der Spindel 32, ohne dass die Spindel dabei rotiert.
- Werden die erste Mutter 33 und die zweite Mutter 34 in die gleiche Richtung mit der gleichen Geschwindigkeit gedreht, so führt dies zu einer Rotation der Spindel, ohne dass sich die Spindel 32 dabei in axialer Richtung verschiebt.
- Werden die erste Mutter 33 und die zweite Mutter 34 in entgegen gesetzte Drehrichtungen mit unterschiedlichen Geschwindigkeiten gedreht, so führt dies zu einer überlagerten Rotations- und Translationsbewegung der Spindel 32.

Die verschiedenen Bewegungsarten der Spindel 32 sind in Figur 9 durch Pfeile neben der Spindel angedeutet.

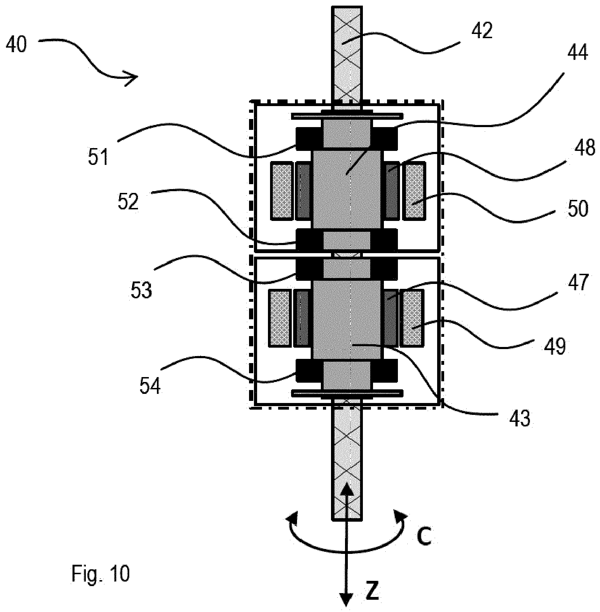

In Figur 10 ist ein drittes Ausführungsbeispiel eines Hub-Dreh-Moduls 40 mit einer Spindel 42, einer ersten Mutter 43 und einer zweiten Mutter 44 dargestellt. Die erste Mutter 43 wird durch einen ersten Motor angetrieben, der mit einem ersten Rotor 47 und einem ersten Stator 49 ausgestattet ist. Dabei umfasst der erste Rotor 47 mehrere Magnete, die unmittelbar an der Außenseite der ersten Mutter 43 angeordnet sind. Der erste Stator 49 umgibt den als Innenläufer ausgebildeten Rotor 47. Entsprechend wir die zweite Mutter 44 durch einen zweiten Motor angetrieben, der mit einem zweiten Rotor 48 und einem zweiten Stator 50 ausgestattet ist. Der zweite Rotor 48 umfasst ebenfalls mehrere Magnete, die an der Außenseite der zweiten Mutter 44 angeordnet sind. Der zweite Rotor 48 ist als Innenläufer ausgebildet. Die Drehachse des ersten Rotors 47 fällt mit der Drehachse der ersten Mutter 43 und mit der Drehachse der Spindel 42 zusammen. Die Drehachse der zweiten Rotors 48 fällt mit der Drehachse der zweiten Mutter 44 und der Spindel 42 zusammen. Die Muttern 43, 44 sind über Lager 51, 52, 53, 54 an einem Gehäuse drehbar gelagert. Die Statoren 49, 50 sind fest mit diesem Gehäuse verbunden.

Derartige Hub-Dreh-Module 1, 30, 40 können beispielsweise zum Antreiben der dritten und vierten Achse eines Scararoboters eingesetzt werden. Darüber hinaus kann er auch bei einem Deltaroboter als Antrieb für die vierte Achse eingesetzt werden. Er ersetzt dabei ein an sich bekanntes Hub-Dreh-Modul.

Sämtliche Merkmale der Erfindung können sowohl einzeln als auch in beliebiger Kombination erfindungswesentlich sein.

### Bezugszahlen

- 1: Kugelgewindetrieb
- 2: Spindel
- 3: erste Mutter
- 4: zweite Mutter
- 5: Linksgewindenut
- 6: Rechtsgewindenut
- 7: Kreuzung
- 8: Längsachse der Spindel
- 9: Kugel
- 10: erster Riemen
- 11: erste Riemenscheibe
- 12: zweite Riemenscheibe
- 13: erster Motor
- 14: zweiter Motor
- 15: zweiter Riemen
- 16: dritte Riemenscheibe
- 17: vierte Riemenscheieb
- 18: Gehäuse
- 19: erste Gewindenut
- 20: zweite Gewindenut
- 21: Stirnseite der ersten Mutter
- 22: Stirnseite der zweiten Mutter
- 23: Längsachse der ersten Mutter
- 24: Stirnseite der zweiten Mutter
- 25: Stirnseite der zweiten Mutter
- 26: Längsachse der zweiten Mutter
- 27: Kopplungsteil
- 28:
- 29:
- 30: Hub-Dreh-Modul
- 31:
- 32: Spindel
- 33: erste Mutter
- 34: zweite Mutter
- 35: Linksgewindenut
- 36: Rechtsgewindenut
- 37: Kreuzung
- 38: Längsachse der Spindel
- 39: Basis
- 40: Hub-Dreh-Modul
- 41:
- 42: Spindel
- 43: erste Mutter
- 44: zweite Mutter
- 45:
- 46:
- 47: erster Rotor
- 48: zweiter Rotor
- 49: erster Stator
- 50: zweiter Stator
- 51: Lager
- 52: Lager
- 53: Lager
- 54: Lager

## Patentansprüche

1. Hub-Dreh-Modul
mit einer Spindel (2, 32, 42), welche an der Außenseite eine Linksgewindenut (5, 35) und eine Rechtsgewindenut (6, 36) aufweist,
mit einer ersten Mutter (3, 33, 43),
mit einer Durchgangsöffnung der ersten Mutter (3, 33, 43), in welcher die Spindel (2, 32, 42) aufgenommen ist,
mit einer ersten Gewindenut (19) an der Innenseite der ersten Mutter (3, 33, 43), welche zusammen mit der Linksgewindenut (5, 35) der Spindel (2, 32, 42) einen ersten Spiralkanal bildet, wobei der erste Spiralkanal Teil einer geschlossenen ersten Kugel-Umlaufbahn ist, welche der ersten Mutter (3, 33, 43) zugeordnet ist,
mit mehreren in dem ersten Spiralkanal aufgenommenen Kugeln (9),
mit einer zweiten Mutter (4, 34, 44),
mit einer Durchgangsöffnung der zweiten Mutter (4, 34, 44), in welcher die Spindel (2, 32, 42) aufgenommen ist,
mit einer zweiten Gewindenut (20) an der Innenseite der zweiten Mutter (4, 34, 44), welche zusammen mit der Rechtsgewindenut (6, 36) der Spindel (2, 32, 42) einen zweiten Spiralkanal bildet, wobei der zweite Spiralkanal Teil einer geschlossenen zweiten Kugel-Umlaufbahn ist, welche der zweiten Mutter (4, 34, 44) zugeordnet ist,
wobei die Spindel (2, 32, 42) einen Überlappungsbereich aufweist, in welchem die Linksgewindenut (5, 35) und die Rechtsgewindenut (6, 36) überlappen,
mit einem ersten Motor (13,45), welcher die erste Mutter (33) zur Rotation antreibt,
mit einem zweiten Motor (14, 46), welcher die zweite Mutter (14, 34) zur Rotation antreibt.

2. Hub-Dreh-Modul nach Anspruch 1, **dadurch gekennzeichnet, dass** der der sich in axialer Richtung der Spindel (2, 32, 42) erstreckende Bereich der Überlappung mindestens eine Ganghöhe der Linksgewindenut (5, 35) und/ oder mindestens eine Ganghöhe der Rechtsgewindenut (6, 36) umfasst.

3. Hub-Dreh-Modul nach Anspruch 1 oder 2, **dadurch gekennzeichnet, dass** der sich in axialer Richtung der Spindel erstreckende Bereich der Überlappung ein Vielfaches der Ganghöhe der Linksgewindenut (5, 35) und/ oder ein Vielfaches der Ganghöhe der Rechtsgewindenut (6, 36) umfasst.

4. Hub-Dreh-Modul nach Anspruch 1, 2 oder 3, **dadurch gekennzeichnet, dass** der Bereich der Überlappung die gesamte Länge der Linksgewindenut (5, 35) und/ oder der Rechtsgewindenut (6, 36) umfasst.

5. Hub-Dreh-Modul nach einem der vorhergehenden Ansprüche, **dadurch gekennzeichnet, dass** die Steigung der Linksgewindenut (5, 35) mit der Steigung der Rechtsgewindenut (6, 36) übereinstimmt.

6. Hub-Dreh-Modul nach einem der Ansprüche 1 bis 4, **dadurch gekennzeichnet, dass** die Steigung der Linksgewindenut (5, 35) von der Steigung der Rechtsgewindenut (6, 36) verschieden ist.

7. Hub-Dreh-Modul nach einem der vorhergehenden Ansprüche, **dadurch gekennzeichnet, dass** der Bereich der Überlappung mindestens so lang ist wie die Ausdehnung der ersten Mutter (3, 33, 43) und/ oder der zweiten Mutter (4, 34, 44) in axialer Richtung der Spindel (2, 32, 42).

8. Hub-Dreh-Modul nach einem der vorhergehenden Ansprüche, **dadurch gekennzeichnet, dass** die erste Mutter (3, 33, 43) und die zweite Mutter (4, 34, 44) hinsichtlich ihrer äußeren Bauform übereinstimmen.

9. Hub-Dreh-Modul nach einem der vorhergehenden Ansprüche, **dadurch gekennzeichnet, dass** der Durchmesser der Spindel (2, 32, 42) im wesentlichen mit der Ganghöhe der Linksgewindenut (5, 35) und/ oder der Rechtsgewindenut (6, 36) übereinstimmt.

10. Hub-Dreh-Modul nach einem der vorhergehenden Ansprüche, **dadurch gekennzeichnet, dass** die Spindel mit mehreren parallel verlaufenden Linksgewindenuten ausgestattet ist, dass die erste Mutter mit mehreren parallel verlaufenden ersten Gewindenuten ausgestattet ist, und dass die Linksgewindenuten und die ersten Gewindenuten zusammen einen mehrgängigen ersten Spiralkanal bilden.

11. Hub-Dreh-Modul nach einem der vorhergehenden Ansprüche, **dadurch gekennzeichnet, dass** die Spindel mit mehreren parallel verlaufenden Rechtsgewindenuten ausgestattet ist, dass die zweite Mutter mit mehreren parallel verlaufenden zweiten Gewindenuten ausgestattet ist, und dass die Rechtsgewindenuten und die zweiten Gewindenuten zusammen einen mehrgängigen zweiten Spiralkanal bilden.

12. Hub-Dreh-Modul nach einem der vorhergehenden Ansprüche, **dadurch gekennzeichnet, dass** die Spindel als Hohlkörper ausgebildet ist und einen sich in axialer Richtung erstreckenden Hohlraum aufweist.

13. Hub-Dreh-Modul nach einem der vorhergehenden Ansprüche, **dadurch gekennzeichnet, dass** der erste Motor (13, 45) und der zweite Motor (14, 46) eine gemeinsame Steuerung aufweisen.

14. Hub-Dreh-Modul nach einem der vorhergehenden Ansprüche, **dadurch gekennzeichnet, dass** die erste Mutter (13, 33. 43) und die zweite Mutter (14, 34, 44) an einem Gehäuse (18) oder einer Basis (39) translationsfest und drehbar aufgenommen sind, dass der erste Motor (13, 45) und der zweite Motor (14, 46) an dem Gehäuse (18) oder an der Basis (39) angeordnet sind und dass die Spindel (12, 32, 42) an dem Gehäuse (18) oder der Basis (39) drehbar und verschiebbar aufgenommen ist.

15. Hub-Dreh-Modul nach einem der vorhergehenden Ansprüche, **dadurch gekennzeichnet, dass** der erste Motor (45) einen als Innenläufer ausgebildeten ersten Rotor (47) aufweist, dass der erste Rotor (47) an der Außenseite der ersten Mutter (43) angeordnet ist und diese umgibt, wobei die Drehachse des ersten Rotors (47) mit der Drehachse der ersten Mutter (43) zusammenfällt, dass der zweite Motor (46) einen als Innenläufer ausgebildeten zweiten Rotor (48) aufweist, dass der zweite Rotor (48) an der Außenseite der zweiten Mutter (44) angeordnet ist und diese umgibt, wobei die Drehachse des zweiten Rotors (48) mit der Drehachse der zweiten Mutter (44) zusammenfällt.

16. Industrieroboter mit mindestens einem Betätigungsarm und mit einem an dem Betätigungsarm angeordneten Trägerelement, welches ein Werkzeug oder einen Greifer aufnimmt, **dadurch gekennzeichnet, dass** der Industrieroboter mit einem Hub-Dreh-Modul (1, 30, 40) nach einem der Ansprüche 1 bis 15 ausgestattet ist, welches auf ein an dem Trägerelement angeordnetes Werkzeug oder einen an dem Trägerelement angeordneten Greifer eine Rotations- oder Translationsbewegung überträgt.
